**Europäisches Patentamt**

**European Patent Office**

**Office européen des brevets**

(19)

(11) Publication number: **0 067 232**
**A1**

## (12) EUROPEAN PATENT APPLICATION
published in accordance with Art. 158(3) EPC

(21) Application number: **82900040.5**

(22) Date of filing: **16.12.81**

Data of the international application taken as a basis:

(86) International application number:
**PCT/JP81/00381**

(87) International publication number:
**WO82/02162 (08.07.82 82/17)**

(51) Int. Cl.³: **B 23 G 3/00**
//G05B19/18

(30) Priority: **26.12.80 JP 188929/80**

(43) Date of publication of application:
**22.12.82 Bulletin 82/51**

(84) Designated Contracting States:
**DE FR GB**

(71) Applicant: **Fanuc Ltd**
**5-1, Asahigaoka, 3-chome**
**Hino-shi, Tokyo 191(JP)**

(72) Inventor: **NOZAWA, Ryoichiro**
**12-1-2105, Sarugaku-cho Shibuya-ku**
**Tokyo 150(JP)**

(72) Inventor: **KAWAMURA, Hideaki**
**1375-5, Narahara-cho Hachioji-shi**
**Tokyo 193(JP)**

(72) Inventor: **MIYATA, Mitsuto**
**Room 38-4 Nanyodai 1768-149 Shimoyugi**
**Hachioji-shi Tokyo 192-03(JP)**

(74) Representative: **Opperman, Stuart Richard et al,**
**Haseltine Lake & Co. Hazlitt House 28 Southampton**
**Buildings Chancery Lane**
**London WC2A 1AT(GB)**

(54) **DIGITALLY CONTROLLED SCREW THREAD CUTTING DEVICE.**

(57) A digitally controlled screw thread cutting device which can start cutting threads from an arbitrary position of rotation of the spindle. This device comprises thread cutting starting position indexing means for comparing the spindle rotational position detected by spindle rotational position detecting means with a predesignated rotational position to start cutting threads and starts feeding a cutter synchronized with the revolution of the spindle into a workpiece when the two positions of rotation coincide with one another. This device can thus cut special threads such as multiple screw threads and the like simply.

FIG. 2

EP 0 067 232 A1

TITLE MODIFIED
see front page

S P E C I F I C A T I O N

NUMERICAL-CONTROLLED SCREW CUTTING DEVICE

TECHNOLOGICAL FIELD

The present invention relates to a numerical-controlled screw cutting device which is capable of starting a screw cutting operation at any postion of rotation of a spindle.

TECHNOLOGICAL BACKGROUND

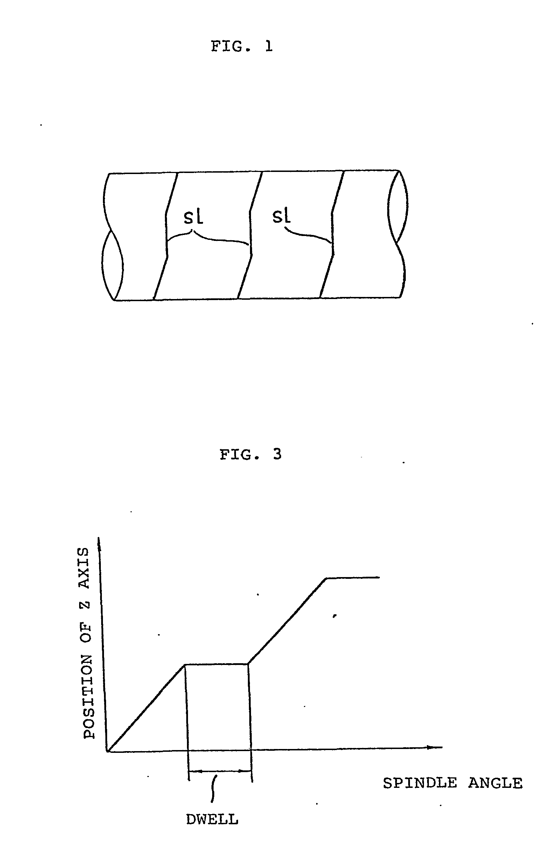

In a conventional numerical-controlled screw cutting device which cuts a screw in a workpiece by controlling the relative feed of a tool and the workpiece in synchronism with the rotation of a spindle, the screw cutting operation cannot be started except at a predetermined position of rotation of the spindle because a one-turn signal that occurs at a specified position of rotation during one turn of the spindle is used as a screw cutting start signal to start the screw cutting operation. Consequently, for example in the case of cutting a multiple thread screw, it is necessary that the cutting start position of the tool be shifted previously, and it is difficult to perform such a special cutting operation, for instance, as shown in Fig. 1 in which the inclination of one portion of each slot $s\ell$ is reduced to zero or made different from the inclination of its other portions within one turn.

DISCLOSURE OF THE INVENTION

The present invention is intended to overcome such a defect of the prior art and has for its object to make it possible to start the screw cutting operation at any position of rotation of the spindle.

Briefly stated, the present invention is provided with means for detecting the position of rotation of a spindle and screw cutting start position indexing means for comparing the detected position of rotation of the spindle and a designated position of rotation of the spindle for starting a screw cutting operation and, in the case of coincidence, starting the relative feed of a tool and a workpiece synchronized with the rotation of the spindle. The means for detecting the position of rotation of the spindle comprises, for instance, a pulse generator mounted on the spindle and a counter for counting the number of output pulses from the pulse generator. Since screw cutting can be started at a desired position of rotation of the spindle, special screw cutting, such as multiple thread screw cutting, can easily be carried out.

## BRIEF DESCRIPTION OF THE DRAWINGS

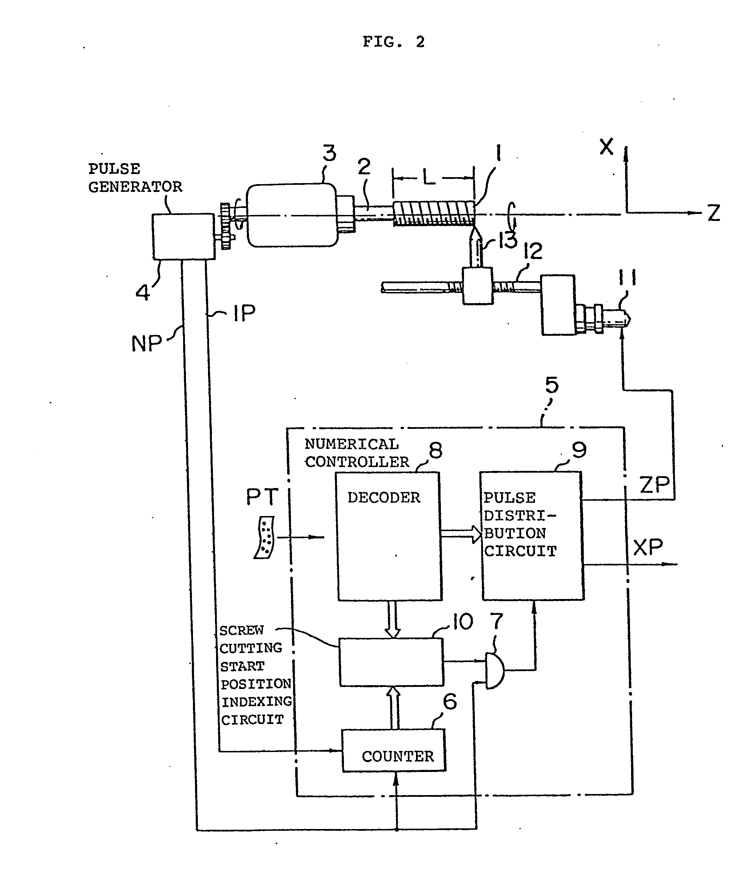

Fig. 1 is a diagram explanatory of an example of special screw cutting; Fig. 2 is a block diagram illustrating the principal part of a device embodying the present invention; and Fig. 3 is a schematic diagram showing an example of a locus of movement of a tool.

## PREFERRED EMBODIMENTS OF THE INVENTION

Fig. 2 is a block diagram illustrating the principal part of the device embodying the present invention. Reference

- 3 -

0067232

numeral 1 indicates a workpiece, 2 a spindle, 3 a spindle motor, 4 a pulse generator, 5 a numerical controller, 6 a counter, 7 an AND gate, 8 a decoder, 9 a pulse distribution circuit, 10 a screw cutting start position indexing circuit, 11 a Z-axis servomotor, 12 a ball screw and 13 a tool.

The workpiece 1 is mounted on the spindle 2 and driven by the spindle motor 3. To the spindle is coupled the pulse generator 4, which generates a plurality of snychronizing pulses NP per turn of the spindle and one one-turn pulse 1P at a specified position of rotation during one turn of the spindle. The synchronizing pulses NP are applied to the counter 6 in the numerical controller 5 for integration and, at the same time, they are provided via the AND gate 7 to the pulse distribution circuit 9. The counter 6 is reset by the one-turn pulse 1P only once at the start of the screw cutting operation and since the number of synchronizing pulses necessary for one turn of the spindle is already known, the content of the counter 6 is indicative of the position of rotation of the spindle. Also it is possible to arrange the counter 6 so that is overflows with the synchronizing pulses NP of one turn and resumes the counting with its initial value. The pulse generator 4 and the counter 6 constitute means for detecting the position of rotation of the spindle.

A command tape PT has stored therein pulse distribution data, such as the pitch of the screw to be cut, the distance of movement of the tool and so forth, and information on the position of rotation of the spindle which indicates the position of rotation of the spindle 2 at which the screw cutting operation is to be started. The decoder 8 decodes the command tape PT and generates distribution data. The pulse distribution data is provided to the pulse distribution circuit 9 and the information on the position of rotation of the spindle is applied to the screw cutting start position indexing circuit 10. The indexing circuit 10 compares the content of the counter 6 and the information on the designated position of rotation of the spindle for starting the screw cutting operation and, in the case of coincidence, opens the AND gate 7 to permit the passage therethrough of the snychronizing pulses NP for input into the pulse distribution circuit 9 and, at this timing, the screw cutting operation is started. That is to say, the pulse distribution circuit 9 is responsive to the snychronizing pulses NP to perform the pulse distribution operation; namely, distribution pulses ZP are delivered to the Z-axis servomotor 11 to rotate the ball screw 12 for feeding the tool 13 in a -Z direction at a feed rate dependent on the lead of the screw and the revolving speed of the spindle and, after completion of cutting for a length L, an X-axis servomotor, not shown, is driven by distribution pulses XP to move the tool 13 in a -X direction, completing one screw cutting process.

As described above, according to the device of this embodiment, the screw cutting operation can be started at an arbitrary position of rotation of the spindle, so that enven in the case of cutting multiple thread screw, there is no need of shifting the cutting start position of the tool 13 in the Z-axis direction and it is sufficient only to command that the cutting start position be displaced through a predetermined angle from the position of rotation of the spindle at which the first screw cutting operation was started. Furthermore, such special screw cutting as shown in Fig. 1 can easily be carried out by commanding the screw cutting start position for each screw cutting command block as depicted in Fig. 3 which shows the locus of movement of the tool, the ordinate representing the position of the tool in the Z-axis direction and the abscissa the angle of rotation of the spindle.

In this embodiment, use is made of a detector with which it is not possible to detect the angle of rotation of the spindle, such as the pulse generator 4, but if an angle detector is used which is capable of directly outputting the angle of rotation of the spindle, such as a resolver, absolute encoder, or optical position detector, the counter 6 could be omitted. In this case, however, since the synchronizing pulses are not available from the detector, it is necessary to provide a detector for detecting the amount of rotation of the spindle per unit time from the detector output and to apply the detected output to the pulse distribution circuit 9.

As has been described in the foregoing, according to the present invention, the position of rotation of the spindle is detected by the means for detecting the position of rotation of the spindle and when the detected position coincides with a designated position of rotation of the spindle for starting the screw cutting operation, the relative feed of the tool and the workpiece synchronized with the rotation of the spindle is started. Thus, since the screw cutting operation can be started at a desired position of rotation of the spindle, the present invention has the advantage that special screw cutting, such as multiple thread screw cutting or the like, can easily be effected.

C L A I M S

1. A numerical-controlled screw cutting device which cuts a screw in a workpiece by controlling the relative feed of a tool and the workpiece in synchronism with the rotation of a spindle, characterized by the provision of spindle rotational position detecting means for detecting the position of rotation of the spindle, and screw cutting start position indexing means for comparing the position of rotation of the spindle detected by the detecting means and a predetermined position of rotation of the spindle for the start of screw cutting and, in the case of coincidence, permitting the start of the relative feed of the tool and the workpiece synchronized with the rotation of the spindle.

2. A numerical-controlled screw cutting device according to claim 1, characterized in that the means for detecting the position of rotation of the spindle is composed of a pulse generator for generating a plurality of synchronizing pulses per rotation of the spindle and a one-turn pulse at a specified position of rotation of the spindle, and a counter for counting the synchronizing pulses of the pulse, generator.

3. A numerical-controlled screw cutting device according to claim 2, characterized in that the counter is reset by the one-turn pulse at the start of the screw cutting operation.

4. A numerical-controlled screw cutting device according to claim 2, characterized in that, when coincidence is detected between the detected and designated positions of rotation,
the screw cutting start position indexing means opens an AND
gate supplied with the synchronizing pulses, applying the
synchronizing pulses to a pulse distribution circuit.

FIG. 1

FIG. 3

FIG. 2

# INTERNATIONAL SEARCH REPORT

International Application No PCT/JP81/00364

## I. CLASSIFICATION OF SUBJECT MATTER (if several classification symbols apply, indicate all) [3]

According to International Patent Classification (IPC) or to both National Classification and IPC

Int. Cl.[3]   B23G 3/00, //G05B 19/18

## II. FIELDS SEARCHED

### Minimum Documentation Searched [4]

| Classification System | Classification Symbols |
|---|---|
| I P C | B23G 3/00 |

### Documentation Searched other than Minimum Documentation to the Extent that such Documents are Included in the Fields Searched [5]

| | |
|---|---|
| Jitsuyo Shinan Koho | 1920 - 1981 |
| Kokai Jitsuyo Shinan Koho | 1971 - 1981 |

## III. DOCUMENTS CONSIDERED TO BE RELEVANT [14]

| Category [*] | Citation of Document, [15] with indication, where appropriate, of the relevant passages [17] | Relevant to Claim No. [15] |
|---|---|---|
| X | US,A, 4019035 (Cincinnatti Milacron Inc.) 19, April, 1977 (19.04.1977) | 1, 2, 3, 4 |
| X | JP,A, 53-141990 (Osumi Tekkosho Kabushiki Kaisha) 11, December, 1978 (11.12.1978) | 1 |
| Y | JP,A, 53-141990 (Osumi Tekkosho Kabushiki Kaisha) 11, December, 1978 (11.12.1978) | 2, 3, 4 |
| Y | JP,U, 53-026579 (Ikegai Tekko Kabushiki Kaisha) 7, March, 1978 (7.3.1978) | 2, 3, 4 |

"X" document of particular relevance; the claimed invention cannot be considered novel or cannot be considered to involve an inventive step.

"Y" document of particular relevance; the claimed invention cannot be considered to involve an inventive step when the document is combined with one or more other such documents, such combination being obvious to a person skilled in the art

* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search [2] | Date of Mailing of this International Search Report [2] |
|---|---|
| January 23, 1982 (23.01.1982) | February 1, 1982 (01.02.82) |

| International Searching Authority [1] | Signature of Authorized Officer [20] |
|---|---|
| Japanese Patent Office | |

Form PCT.ISA 210 (second sheet) (October 1977)